# EUROPEAN PATENT SPECIFICATION

(11) **EP 3 746 330 B1**
(45) Date of publication and mention of the grant of the patent: **18.10.2023**
(21) Application number: 19814732.4
(22) Date of filing: 14.02.2019
(51) Int. Cl.: B60P 3/22, B65D 88/28

(54) **A NEW TYPE TRAILER BODY STRUCTURE**
NEUARTIGE ANHÄNGERKÖRPERSTRUKTUR
STRUCTURE DE CORPS DE REMORQUE D'UN NOUVEAU TYPE

(30) Priority: 20.02.2018 TR 201802377
(43) Date of publication of application: 09.12.2020
(73) Proprietor: Katmerciler Araç Üstü Ekipman Sanayi Ve Ticaret Anonim Sirketi, 35620 Çigli/Izmir (TR)
(72) Inventor: AKPAK, Fahrettin, Izmir (TR); TEMELTA , Varol, Izmir (TR); ÖZTÜRK, Sahin, Izmir (TR)
(86) International application number: PCT/TR2019/050097
(87) International publication number: WO 2019/236036

(56) References cited:
- EP-A1- 2 236 439
- US-A1- 2011 148 091
- US-A1- 2013 328 298
- US-A1- 2017 247 182
- US-A1- 2017 247 182
- US-B1- 9 789 916

## Description

### TECHNICAL FIELD

The present invention is related to a body structure differentiated with the welding process applied on the trailer tank.

The present invention is particularly related to a trailer body structure which is improved with a revision made on the welding lines created during joining sheet metals of the body in the trailer tank.

### PRIOR ART

The trailer is a highway vehicle used for freightage designed according to the load it will carry, pulled by a motor vehicle and comprises at least one axle shaft and connection equipment which enables it to connect to a vehicle. The dimensions of the trailers and journey conditions are determined by Highway Traffic Legislation. The trailers are the vehicles which can be used in transporting and carrying any heavy load including the dangerous materials. Basically the trailers consist of baffle and dished head sections that are located in determined intervals successively and a body section formed with the body sheet metals of said sections. Adapting the body sheet metals to the dished head sections in a manner to form the body is obtained by using welding methods.

A welding method used for the trailer is disclosed in the application No US3000340. In said application it is seen that all welding lines are structures vertically to the floor in order to create the trailer body. This situation is also applied in standard trailer configurations. Particularly this vertical direction welding line created in adapting the conical sheet metals of the body makes it difficult to obtain product with the required bending strength. In this case in order to provide required strength values, the thickness of the sheet metals shall be increased to 7- 8mm. The increase made in the sheet metals causes the vehicle to which the trailer is connected to have difficulty, it increases the loads coming to the axle shaft of the vehicle and it brings more fuel consumption into question.

The patent application numbered US2011/148091A1 is found in the literature regarding the subject matter. The present invention discloses a tank trailer for transporting flowable material. The tank trailer includes a low-profile tank having a rear section, a front section, and a transitional section. The transitional section connects the rear section and the front section such that flowable material can flow among the sections. The rear section has a rear circumference and a rear center of gravity. The front section has a front circumference and a front center of gravity. The front circumference is smaller than the rear circumference, and the rear center of gravity is lower than the front center of gravity. The front section and the transitional section are frameless. The tank trailer also includes a trailer suspension operatively connected to the rear section.

As a result of this the abovementioned problems that cannot be solved under the light of the prior art make it necessary to make an improvement in the relevant technical field.

### BRIEF DESCRIPTION OF THE INVENTION

The present invention is related to a trailer body in which a revision is made in the welding line of the conical body section in order to eliminate the abovementioned disadvantages and bring new advantages to the relevant technical field.

The main purpose of the invention is to provide a trailer body which prevents increasing the sheet metals thickness in obtaining required bending strength.

Another purpose of the invention is to provide a trailer body which enables to decrease the difficulties and loads on the vehicle whereupon the trailer is connected.

Another purpose of the invention is to provide a trailer body which prevents the increase in the fuel consumption.

In order to fulfill all purpose mentioned above and arise out of the following detailed description, the present invention is a trailer body structure defined by dished heads and a rear body sheet metal which surrounds said dished heads and a front conical section with a middle conical body sheet metal there between, characterized in that said trailer body structure comprises at least one inclined welding line configured in a manner to provide joining said middle conical body with the rear body sheet metal and said front cone sheet metal, whereby said front conical section comprises at least one inclined welding line and is configured with a welding line angle towards the body and less than 90°, the inclined welding line being configured in a manner to provide an incline in the middle conical body sheet metal with respect to the rear body sheet metal and to the front conical section.

In order to fully understand the embodiment of the present invention and advantages with additional elements, it shall be evaluated by the following figures with the description below.

### BRIEF DESCRIPTION OF DRAWINGS

Figure 1 is a detailed view of the middle conical body in respect to the prior art.
Figure 2 is a general view of the trailer.
Figure 3 is a general view of the trailer body.
Figure 4 is a detailed view of the middle conical body.

### REFERENCE NUMBERS

10 Trailer
   11 Wheels
   12 Body
      121 Front Dished Head Section
      122 First Baffle
      123 Second Baffle
      124 Front Conical Section
      125 Interval Dished Head Section
      126 Rear Dished Head Section
   13 Rear Body Sheet Metal
   14 Middle Conical Body
A: Welding Line
B: Inclined Welding Line
x: Welding Line Angle

### DETAILED DESCRIPTION OF THE INVENTION

In this detailed description, the novelty of the present invention is described with examples in a manner without any limiting effect only to clarify the subject matter.

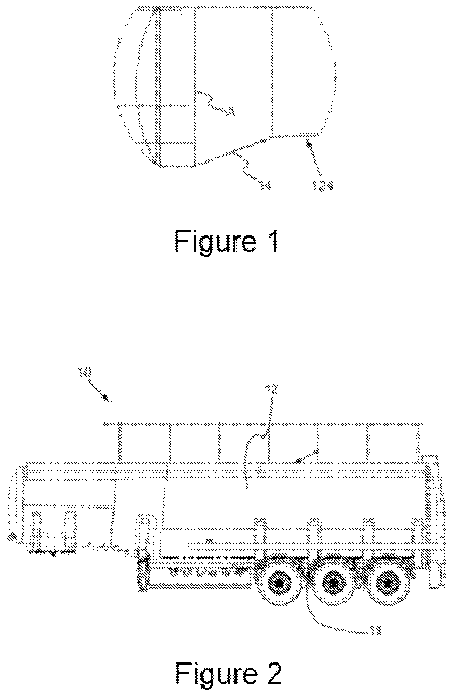

The general view of a trailer (10) is given in Figure 2. Said trailer (10) basically consists of wheels (11) and a body (12) mounted on said wheels (11). Said body (12) consists of a front dished head section (121 ) aligned successively, a first baffle (122), a second baffle (123), a front conical section (124), an interval dished head section (125) and a rear dished head section (126). Said front dished head section (121) closes the front section of the trailer (10) tank and corresponds to the pressure of the substance within the tank during vehicle moving or braking. Said first baffle (122) is used to prevent shaking in the trailer (10) tank division with a net volume exceeding 7500 liters and to provide the vehicle move more stably and consists of a dished head whereupon some holes are created on predetermined sections. Said second baffle (123) also consists of a dished head on which holes are created and prevents shaking of the passage section of the tank. Said front conical section (124) is the section which provides flexibility to the trailer (10) body. The middle conical body (14) provides that no product is left within the trailer (10) tank, it also provides to adjust the height of the trailer (10) tank according to the height of the towing vehicle. Said interval dished head section (125) is the dished head which prevents passage of the substance between two divisions of the trailer (10) tank and balances the pressure caused by the substance carried in the relevant section. Said rear dished head section (126) is the dished head used for providing impermeability at the rear section of the trailer (10) tank and corresponds to the pressure caused by the material carried when the vehicle moves.

This section that constitutes the body (12) is covered by the rear body sheet metal (13) and middle conical body (14) sheet metal. Said rear body sheet metal (13) provides impermeability by surrounding the dished head sections that create post middle conical body (14) sheet metal of the trailer (10) tank. Said middle conical body (14) sheet metal provides impermeability by surrounding the dished head sections that create post front conical section (124) of the trailer (10) tank. The rear body sheet metal (13) and middle conical body (14) sheet metal are obtained by bending the sheet metal with a strength which can be durable against the shaking of the carried substance within the trailer (10) tank and the pressure created by this shaking. The rear body sheet metal (13), the middle conical body (14) sheet metal and the front conical section (124) provide integrity in the trailer (10) body by being mounted with welding methods to the dished head sections.

A prior art view in respect to the welding line (A) made during mounting of the front conical section (124) is given in Figure 1. The welding line (A) created for mounting is configured with a 90° welding line angle (x) according to the floor. In this case in order to provide required strength values, the thickness of the sheet metal shall be increased to 7- 8mm. The increase made in the sheet metal causes the vehicle to which the trailer (10) is connected to have difficulty, it increases the loads coming to the axle shaft of the vehicle and it brings more fuel consumption into question.

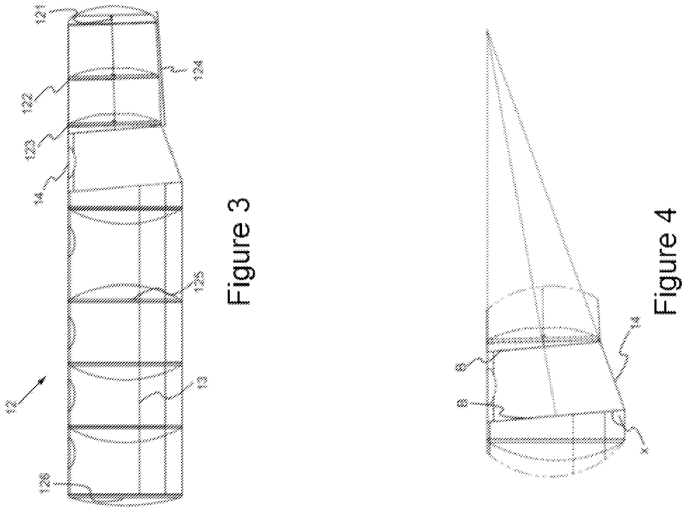

A detailed view of the middle conical body (14) created for eliminating said problems is given in Figure 4. The middle conical body (14) of the present invention, the inclined welding line (B) created for mounting process is configured with a welding line angle (x) less than 90° according to the floor. Therefore, without requiring an increase in the thickness of the material, it shall be possible to reach the required bending strength. The middle conical body (14) provides to obtain a more flexible trailer (10) tank structure due to the incline by means of the welding line angle (x).

## Claims

1. A trailer (10) body (12) structure defined by dished heads and a rear body sheet metal (13) which surrounds said dished heads and a front conical section (124) with a middle conical body (14) sheet metal there between, **characterized in that** said trailer (10) body (12) structure comprises at least one inclined welding line (B) configured in a manner to provide joining said middle conical body (14) with the rear body sheet metal (13) and said front cone sheet metal (13), whereby said front conical section (124) comprises at least one inclined welding line (B) and is configured with a welding line angle (x) towards the body (12) and less than 90°, the inclined welding line (B) being configured in a manner to provide an incline in the middle conical body (14) sheet metal with respect to the rear body sheet metal and to the front conical section (124).

## Patentansprüche

1. Struktur vom Körper (12) des Anhängers (10), die durch die gewölbte Böden und durch ein diese gewölbte Böden umgebendes hinteres Karosserieblech (13) und durch einen vorderen konischen Teil (124) mit dem dazwischen liegenden Blech des mittleren konischen Körpers (14) definiert wird, **dadurch gekennzeichnet, dass** die jeweilige Struktur vom Körper (12) des Anhängers (10) mindestens eine schräge Schweißlinie (B) umfasst, die derart konfiguriert wird, dass sie vorsieht, jeweiligen mittleren konischen Körper (14) mit dem hinteren Körperblech (13) und mit dem jeweiligen vorderen Konusblech (13) zusammenzufügen, wobei der jeweilige vordere konische Teil (124) mindestens eine schräge Schweißlinie (B) umfasst und durch einen Winkel (x) von Schweißlinie konfiguriert wird, der zum Körper (12) hin erstreckt und weniger als 90° beträgt, diese schräge Schweißlinie (B) derart konfiguriert wird, dass sie am Blech des mittleren konischen Körpers (14) eine Schräge bezüglich des hinteren Karosseriebleches und des vorderen konischen Teiles (124) vorsieht.

## Revendications

1. Structure de corps (12) de remorque (10) définie par des têtes bombées et une tôle de corps arrière (13) qui entoure lesdites têtes bombées et une section conique avant (124) avec une tôle de corps conique central (14) entre les deux, **caractérisée en ce que** ladite structure de corps (12) de remorque (10) comprend au moins une ligne de soudage inclinée (B) configurée de manière à assurer la jonction dudit corps conique central (14) avec la tôle de corps arrière (13) et ladite tôle de cône avant (13), dans laquelle ladite section conique avant (124) comprend au moins une ligne de soudage inclinée (B) et est configurée avec un angle de ligne de soudage (x) vers le corps (12) et inférieur à 90°, la ligne de soudage inclinée (B) étant configurée de manière à assurer une inclinaison dans la tôle de corps conique central (14) par rapport à la tôle de corps arrière et à la section conique avant (124).
